# FASCICULE DE BREVET EUROPEEN

(11) **EP 0 407 241 B1**
(45) Date de publication et mention de la délivrance du brevet: **28.07.1993**
(21) Numéro de dépôt: 90401651.6
(22) Date de dépôt: 14.06.1990
(51) Int. Cl.: H02G 5/08, H01R 25/16

(54) **Platine amovible de support d'appareils électriques pour dispositif répartiteur de puissance**
Lösbare Platine zur Halterung von elektrischen Geräten für eine Leistungsverteilereinrichtung
Removable electrical apparatus support plate for a power divider device

(30) Priorité: 06.07.1989 FR 8909095
(43) Date de publication de la demande: 09.01.1991
(73) Titulaire: TELEMECANIQUE, 92504 Rueil Malmaison Cedex (FR)
(72) Inventeur: Moreux, Alain, F-21000 Dijon (FR); Nourry, Daniel, F-21000 Dijon (FR); Thierry, Jean-Pierre, F21560 Couternon (FR)
(74) Mandataire: de Saint-Palais, Arnaud Marie

(56) Documents cités:
- EP-A- 300 065
- DE-A- 2 030 449
- US-A- 3 836 885

## Description

La présente invention concerne une platine amovible de support d'appareils électriques qui est associable à un dispositif répartiteur de puissance pour installation électrique basse tension, ce dispositif étant du type comprenant un jeu de barres de puissance horizontales et une enveloppe isolante de forme allongée logeant le jeu de barres, montée fixement dans l'espace central d'un rail profilé et présentant vers l'avant, c'est-à-dire vers l'installateur ou l'utilisateur, une pluralité d'orifices situés en regard des barres et servant à la connexion d'un connecteur portant des organes de contact amovibles embrochables sur les barres et reliés par des conducteurs électriques aux bornes respectives des appareils électriques propres à l'installation.

Pour un tel dispositif répartiteur, il est souhaitable de réaliser une platine amovible de support d'appareils électriques de commande et/ou de protection propres à l'installation, laquelle platine comprenant, de façon générale, un fond plat vertical portant les appareils sur sa face dite arrière, c'est-à-dire sa face dirigée vers l'installateur ou l'utilisateur, dont le montage/démontage sur le rail profilé soit simple et rapide, ne nécessitant l'emploi d'aucun outillage particulier, tout en maîtrisant d'une manière efficace la connexion/déconnexion du connecteur relativement au jeu de barres.

L'invention a pour but d'atteindre ces objectifs.

Selon l'invention, pour un dispositif répartiteur de puissance tel que défini précédemment, la platine amovible de support d'au moins un appareil électrique, du type comprenant un fond plat vertical portant sur sa face dite arrière l'appareil électrique, est caractérisée en ce que le fond de la platine est bordé sur toute sa hauteur de deux flasques latéraux parallèles présentant chacun des moyens d'accrochage par encliquetage sur les deux ailes du rail profilé et que, sur sa face dite avant opposée à sa face arrière, le fond de la platine porte le connecteur qui présente des joues de guidage permettant un embrochage et un débrochage de ses organes de contact par un mouvement de translation restant sensiblement perpendiculaire au plan du jeu de barres.

Selon une autre caractéristique de l'invention, la section intérieure de la platine constituée par son fond et ses deux flasques latéraux est pourvue d'un ressort de compression en forme de fil en U dont les deux extrémités viennent en appui sur le bord d'une des deux ailes du rail profilé pour maintenir la platine en position encliquetée.

Selon un autre aspect de l'invention, le connecteur est monté de façon amovible sur la face avant du fond de la platine à l'aide d'une pièce démontable constituée d'une plaquette qui est surmontée latéralement de deux griffes sous lesquelles viennent s'appuyer respectivement deux tourillons axialement alignés situés de part et d'autre du connecteur, et qui est percée d'une ouverture dans laquelle vient s'engager un crochet de retenue disposé en saillie sur la face avant du fond de la platine.

Cette désolidarisation ou dissociation du connecteur par démontage de ladite pièce est particulièrement intéressante pour pouvoir disposer, au plus près d'une première platine déjà montée avec son connecteur associé sur le rail porteur du dispositif répartiteur, une seconde platine portant un appareillage électrique dont les dimensions sont telles qu'il déborde latéralement vis-à-vis de la platine ; en branchant tout d'abord le connecteur une fois désolidarisé de la seconde platine dans les orifices du répartiteur situés au premier pas accessible vis-à-vis de la première platine en place, puis en agençant la seconde platine sur le rail porteur au niveau de son connecteur branché, il est ainsi possible de perdre le minimum de place entre ces platines et donc d'utiliser au mieux les capacités de dérivation du dispositif répartiteur.

D'autres caractéristiques et avantages de l'invention apparaîtront mieux dans la description détaillée qui suit et se réfère aux dessins annexés donnés uniquement à titre d'exemple et dans lesquels :
La figure 1 représente en élévation, avec arrachements, un dispositif répartiteur de puissance associé à une platine de support d'appareils électriques selon l'invention ;
Les figures 2, 3 et 4 représentent en coupe respectivement trois étapes successives du démontage de la platine avec débrochage du connecteur associé ;
La figure 5 représente en élévation, avec arrachements, un dispositif répartiteur de puissance associé à plusieurs platines dont l'une d'elles porte un appareil électrique faisant saillie latéralement ;
Les figures 6, 7 et 8 représentent schématiquement en perspective respectivement trois étapes successives de désolidarisation du connecteur vis-à-vis de la platine par démontage de la pièce à griffes ; et
La figure 9 représente en perspective la platine équipée d'une goulotte traversant les profilés servant de supports des appareils électriques.

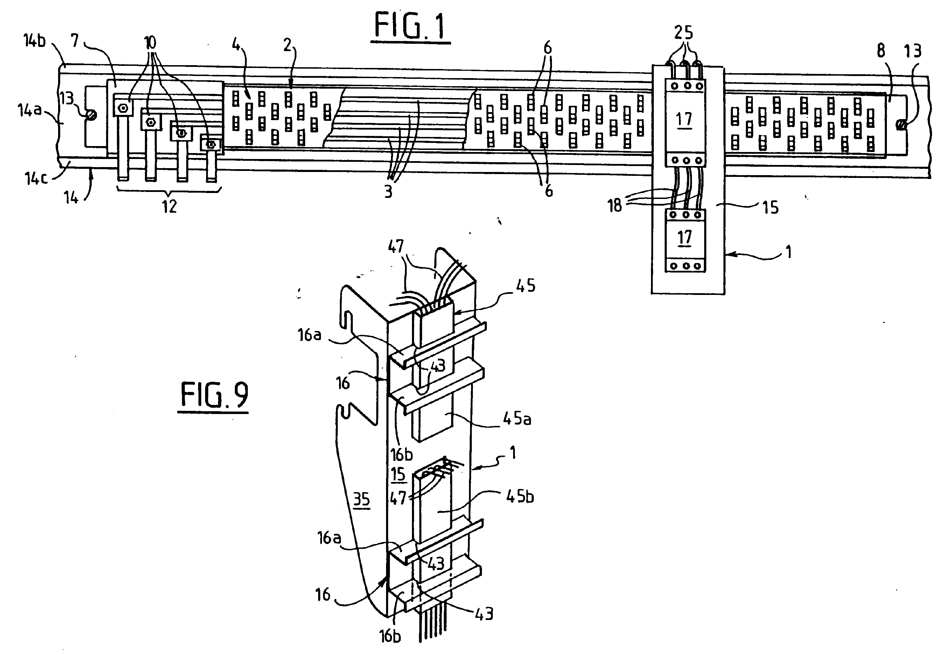

Sur la figure 1, on a désigné par la référence générale 1 une platine départ-moteur de support d'appareils électriques modulaires, qui est associée à un dispositif répartiteur de puissance 2 pour installation électrique basse tension.

Le dispositif répartiteur 2 comporte un jeu de barres conductrices de puissance 3, disposées horizontalement et à plat, par exemple au nombre de quatre correspondant à une ligne triphasée avec neutre, ainsi qu'une enveloppe isolante 4 de forme allongée logeant le jeu de barres 3.

L'enveloppe isolante 4 présente vers l'avant une pluralité d'orifices 6 situés en regard des barres 3 et, de préférence, quinconcés suivant un pas prédéterminé ; les orifices peuvent également être alignés.

L'enveloppe 4 comprend de plus une boîte 7 de connexion amont et un embout 8 de fermeture ; la boîte 7 loge des organes 10 assurant la connexion du jeu de barres 3 à des conducteurs amont 12. Des cloisons appropriées assurent dans l'enveloppe 4, depuis la boîte 7 jusqu'à l'embout 8, l'isolement entre les barres conductrices 3.

L'enveloppe isolante 4, figure 1, est par ailleurs montée fixement à l'aide d'un ensemble vis-écrou 13 à chacune de ses extrémités, dans l'espace central 14a d'un rail porteur constitué par un profilé chapeau 14, entre les ailes 14b, 14c de celui-ci. Le profilé chapeau 14 peut faire partie d'un châssis d'une enveloppe de distribution électrique telle qu'une armoire ou un coffret.

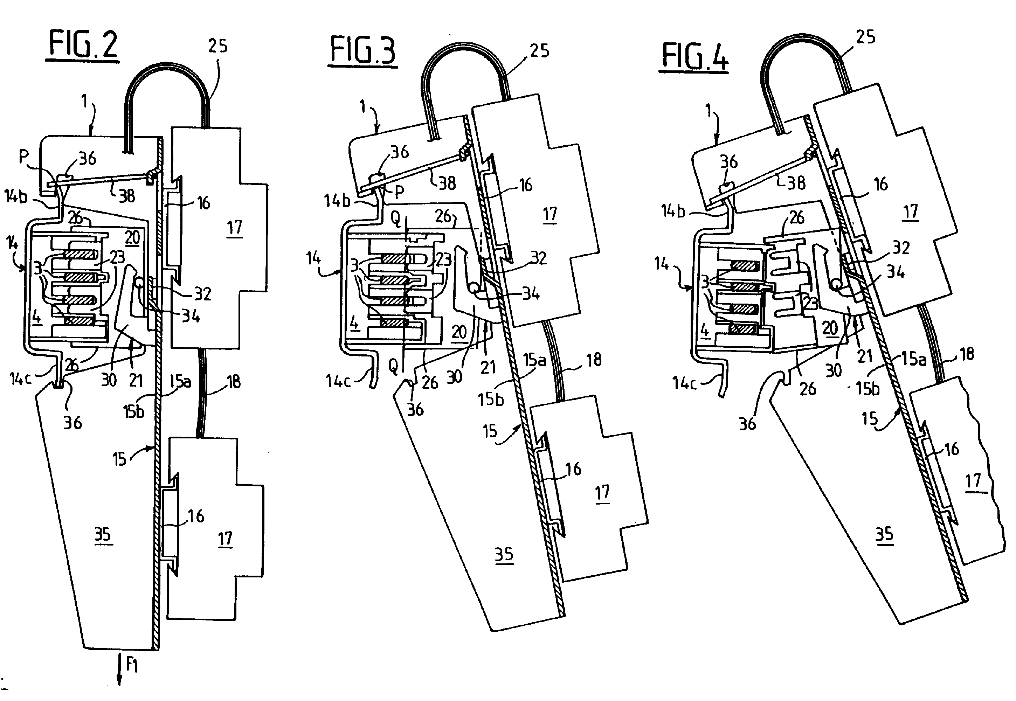

Comme il apparaît sur les figures 2 à 4, la platine amovible 1 de support d'appareils électriques modulaires de commande et/ou de protection tels que des disjoncteurs, contacteurs ou analogues, se compose d'un fond plat vertical 15 dont la face arrière 15a est pourvue de profilés chapeau 16, au nombre de deux dans l'exemple choisi, portant par encliquetage les appareils 17 reliés entre eux par des conducteurs électriques de puissance 18, et dont la face avant 15b porte un connecteur électrique amovible 20 via une pièce de liaison 21 qui est démontable comme on l'explicitera plus loin.

Il convient de noter que les deux profilés chapeau 16 sont chacun réglables en entraxe ; par ailleurs, la platine peut être prévue pour ne porter qu'un seul appareil électrique au moyen d'un profilé chapeau à entraxe également réglable, sans sortir pour autant du cadre de l'invention.

Le connecteur 20 se présente sous la forme d'un bloc parallélépipédique duquel font saillie vers l'avant des pinces de contact 23 qui sont embrochables sur les barres 3 par introduction dans les orifices de l'enveloppe 4 du dispositif répartiteur (figure 2) et qui sont électriquement reliées par des conducteurs de puissance 25 aux bornes respectives du premier appareil 17.

Le connecteur 20 comporte également deux joues parallèles 26 destinées à venir en appui respectivement sur les faces supérieure et inférieure de l'enveloppe 4 du répartiteur pour servir de guide au connecteur lors de l'embrochage de ses pinces de contact 23.

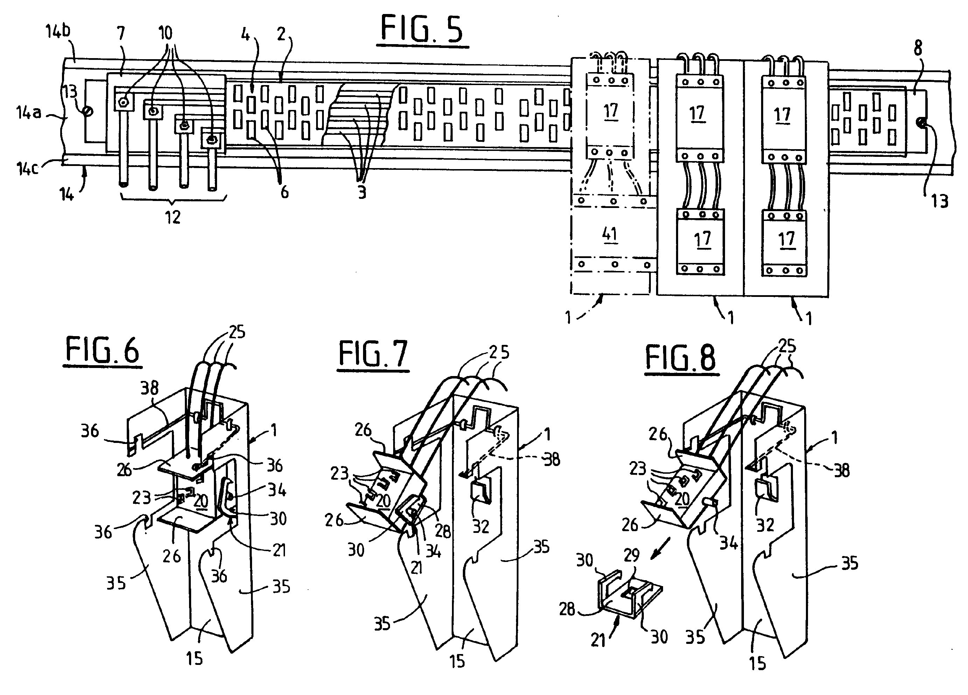

La pièce de liaison 21, mieux visible à l'état démonté sur la figure 8, est constituée par une plaquette 28 percée d'une ouverture centrale 29 et surmontée latéralement de deux griffes parallèles 30. Le montage de la pièce de liaison 21 sur le fond 15 de la platine s'opère par introduction dans l'ouverture 29 d'un crochet de retenue 32 disposé en saillie sur la face avant 15b du fond 15 de la platine ; de préférence, le crochet 32 est formé par une découpe du fond 15 de la platine. Le connecteur 20 est solidarisé à la pièce de liaison 21 au moyen de deux tourillons 34, dont un seul est visible sur les figures 2 à 4, qui sont axialement alignés et situés de part et d'autre du connecteur et qui viennent s'appuyer respectivement sous les deux griffes 30 de la pièce 21.

Comme le montre la figure 6, le fond 15 de la platine est bordé sur toute sa hauteur de deux flasques latéraux parallèles 35 présentant chacun deux encoches 36 destinées à coopérer par encliquetage respectivement avec les deux ailes 14b, 14c du profilé chapeau 14 lors de l'accrochage de la platine 1 sur ce profilé 14, voir figure 2.

Il convient de noter que le fond 15 et les deux flasques latéraux 35 de la platine 1 peuvent être métalliques ou réalisés en matière plastique.

Sur la section intérieure de la platine 1, il est prévu un ressort de compression 38 en forme de fil en U (figure 6) dont les deux extrémités sont situées au niveau des encoches supérieures respectives 36 des deux flasques 35 de manière à venir en appui sur le bord de l'aile 14b du profilé 14 pour maintenir la platine 1 en position encliquetée (figure 2). Dans le cas d'une platine métallique, le ressort 38 assure la continuité de terre avec le profilé 14, lequel joue le rôle de conducteur de protection.

Les figures 2 à 4 montrent le démontage par désencliquetage de la platine 1 ainsi que la déconnexion du connecteur associé 20 par débrochage de ses pinces de contact 23. A partir de la position encliquetée de la platine sur le profilé chapeau 14 et de la position d'embrochage des pinces du connecteur associé sur le jeu de barres 3, figure 2, une traction exercée manuellement vers le bas suivant la flèche F₁ sur les flasques 35 de la platine, à l'encontre du ressort 38, entraîne la descente de la platine et provoque un désengagement de l'aile 14c du profilé 14 hors des encoches inférieures respectives 36 des deux flasques 35 de la platine ; au cours de cette traction, après désengagement de l'aile 14c du profilé 14, un basculement antihoraire de la platine autour du point P d'application du ressort 38 contre l'aile 14b du profilé 14, entraîne par appui de chaque tourillon 34 du connecteur contre l'extrémité libre de la griffe correspondante 30 de la pièce de liaison 21, un débrochage des pinces de contact 23 suivant un mouvement de translation sensiblement perpendiculaire au plan Q-Q du jeu de barres 3, comme illustré à la figure 3.

A ce stade, un relâchement de la traction exercée sur la platine entraîne la remontée de cette dernière par rappel du ressort 38, le fond des griffes 30 de la pièce de liaison 21 venant en contact avec les tourillons 34 du connecteur 20 (figure 3).

La poursuite du basculement antihoraire de la platine 1 autour du point P, figure 3, entraîne la déconnexion totale du connecteur 20 suivant le mouvement de translation précité, comme illustré à la figure 4 ; le démontage de la platine 1, figure 4, est achevé par désengagement de l'aile 14b du profilé 14 hors des encoches supérieures respectives 36 des deux flasques 35 de la platine.

Le montage de la platine 1 sur le profilé chapeau 14, conjointement à la connexion du connecteur associé 20, s'effectue sensiblement d'une manière inverse à celle décrite précédemment, étant entendu que dans les deux cas - montage et démontage de la platine - les joues de guidage 26 du connecteur 20 assurent un embrochage/débrochage des pinces de contact 23 par un mouvement de translation qui reste sensiblement perpendiculaire au plan du jeu de barres 3.

Sur la figure 5, on a représenté à droite deux platines 1 qui sont disposées côte à côte en association avec le dispositif répartiteur 2 et qui portent chacune des appareils 17 s'inscrivrant parfaitement dans la largeur de la platine correspondante.

Néanmoins, il peut arriver qu'une platine à monter doive supporter un appareil dont les dimensions sont telles qu'une fois fixé, il déborde légèrement sur un côté de la platine, comme c'est le cas de l'appareil désigné en 41 pour la platine 1 illustrée en traits mixtes sur la figure 5. Dans ce cas, pour disposer cette platine au plus près de l'ensemble des deux autres platines adjacentes 1, il est prévu de désolidariser le connecteur 20 de la platine en question grâce à un démontage de la pièce de liaison 21.

Les figures 6 à 8 montrent la dissociation du connecteur 20 par démontage de la pièce 21. A partir de la position initiale illustrée à la figure 6, un dégagement de la plaquette 28 hors du crochet de retenue 32 à l'aide d'un outil provoque l'extraction de l'ensemble connecteur 20 - pièce 21 (figure 7). Une fois le connecteur 20 désolidarisé, la pièce 21 devient inutile et elle est enlevée aisément par désengagement des deux tourillons 34 de dessous les griffes correspondantes 30 (figure 8).

Une fois la pièce 21 retirée, les pinces de contact du connecteur désolidarisé 20 sont embrochées sur les barres 3 (figure 5) par introduction dans les orifices 6 situés au premier pas accessible, par exemple à gauche de l'ensemble des deux platines déjà en place. La platine 1 de support des deux appareils 17 et 41 est alors encliquetée sur les ailes 14b, 14c du profilé chapeau 14, occupant la position illustrée en traits mixtes sur la figure 5, de telle sorte qu'elle est décentrée par rapport au connecteur pour venir au plus près de la platine voisine. Ainsi, dans certains cas, grâce à la désolidarisation du connecteur vis-à-vis de la platine, on utilise au mieux les capacités de dérivation du dispositif répartiteur.

Comme le montre la figure 9, les deux profilés chapeau 16 sont chacun pourvus sur leurs deux ailes respectives 16a, 16b de perforations coaxiales 43 pour le passage d'un tube isolant 45, par exemple de section droite rectangulaire, réalisé ici en deux portions 45a, 45b, s'étendant transversalement à la direction longitudinale des profilés 16. Ce tube 45 fait office de goulotte dans laquelle sont logés des conducteurs électriques de contrôle 47 propres aux appareils électriques (non figurés) encliquetés sur ces mêmes profilés 16. Ainsi, avantageusement, le tube 45 permet de cacher la filerie (conducteurs de contrôle) et donc d'améliorer l'esthétique de la platine.

## Revendications

1. Platine amovible de support d'au moins un appareil électrique pour un dispositif répartiteur de puissance (2) comprenant un jeu de barres de puissance horizontales (3) et une enveloppe isolante (4) de forme allongée logeant le jeu de barres, montée fixement dans l'espace central d'un rail profilé (14) et présentant vers l'avant une pluralité d'orifices (6) situés en regard des barres et servant à la connexion d'un connecteur (20) portant des organes de contact (23) amovibles embrochables sur les barres et reliés par des conducteurs électriques aux bornes respectives de l'appareil, ladite platine (1) comprenant un fond plat vertical (15) portant sur sa face dite arrière (15a) l'appareil électrique,
caractérisée en ce que le fond (15) de la platine est bordé sur toute sa hauteur de deux flasques latéraux parallèles (35) présentant chacun des moyens (36) d'accrochage par encliquetage sur les deux ailes du rail profilé (14) et que, sur sa face dite avant (15b) opposée à sa face arrière, le fond (15) de la platine porte le connecteur (20) qui présente des joues de guidage (26) permettant un embrochage et un débrochage de ses organes de contact (23) par un mouvement de translation restant sensiblement perpendiculaire au plan du jeu de barres.

2. Platine selon la revendication 1,
caractérisée en ce que la section intérieure de la platine constituée par son fond (15) et ses deux flasques latéraux (35) est pourvue d'un ressort de compression (38) en forme de fil en U dont les deux extrémités viennent en appui sur le bord d'une des deux ailes du rail profilé (14) pour maintenir la platine en position encliquetée.

3. Platine selon la revendication 1 ou 2,
caractérisée en ce que le connecteur (20) est monté de façon amovible sur la face avant (15b) du fond de la platine à l'aide d'une pièce démontable (21) constituée d'une plaquette (28) qui est surmontée latéralement de deux griffes (30) sous lesquelles viennent s'appuyer respectivement deux tourillons (34) axialement alignés situés de part et d'autre du connecteur, et qui est percée d'une ouverture (29) dans laquelle vient s'engager un crochet de retenue (32) disposé en saillie sur la face avant du fond de la platine.

4. Platine selon la revendication 3,
caractérisée en ce que le crochet de retenue (32) est formé par une découpe du fond (15) de la platine.

5. Platine selon l'une des revendications précédentes, dans laquelle son fond plat (15) est pourvu sur sa face arrière d'un profilé chapeau (16) portant par encliquetage l'appareil électrique,
caractérisée en ce que les deux ailes (16a, 16b) du profilé chapeau (16) présentent respectivement deux perforations coaxiales (43) pour le passage d'un tube isolant (45) faisant office de goulotte pour des conducteurs électriques de contrôle (47).

## Patentansprüche

1. Lösbare Platine zur Halterung mindestens eines elektrischen Geräts für eine Leistungsverteilungsvorrichtung (2) mit einem Satz waagrechten Leistungsstangen (3) und einer isolierenden Hülle (4) länglicher Form, die den Satz Stangen aufnimmt, fest im zentralen Bereich einer Profilschiene (14) angeordnet ist und nach vorne eine Vielzahl von Öffnungen (6) aufweist, die vor den Stangen liegen und zum Anschluß eines Verbinders (20) dienen, der lösbare Kontaktorgane (23) trägt, die auf die Stangen aufsteckbar sind und über elektrische Leiter mit den Klemmen des Geräts verbunden sind, wobei die Platine (1) einen flachen senkrechten Boden (15) aufweist, der auf seiner Rückseite (15a) das elektrische Gerät trägt,
dadurch gekennzeichnet, daß der Boden (15) der Platine über seine ganze Höhe von zwei parallelen Seitenflanschen (35) eingefaßt ist, die je Mittel (36) zum Festhaken durch Einklinken auf die beiden Flügel der Profilschiene (14) aufweisen, und daß der Boden (15) der Platine auf seiner der Rückseite entgegengesetzt liegenden Vorderseite (15b) den Verbinder (20) trägt, der Führungswangen (26) aufweist, die ein Einstecken und ein Herausziehen seiner Kontaktorgane (23) durch eine Translationsbewegung erlaubt, die im wesentlichen senkrecht zur Ebene des Satzes von Stangen bleibt.

2. Platine nach Anspruch 1, dadurch gekennzeichnet, daß dass Innenprofil der Platine bestehend aus ihrem Boden (15) und ihren beiden Seitenflanschen (35) mit einer Druckfeder (38) in Form eines U-Drahts versehen ist, deren beide Enden auf dem Rand eines der beiden Flügel der Profilschiene (14) aufliegen, um die Platine in der eingeklinkten Stellung zu halten.

3. Platine nach Anspruch 1 oder 2, dadurch gekennzeichnet, daß der Verbinder (20) auf der Vorderseite (15b) des Bodens der Platine mit Hilfe eines ausbaubaren Teils (21) lösbar eingebaut ist, das aus einer Platte (28) besteht, über die seitlich zwei Haken (30) überstehen, unter sich denen zwei axial fluchtende Lagerzapfen (34) abstützen, die auf beiden Seiten des Verbinders angeordnet sind, und und die eine Öffnung (29) aufweist, in die sich ein Rückhaltehaken (32) einfügt, der vorspringend auf der Vorderseite des Bodens der Platine angeordnet ist.

4. Platine nach Anspruch 3, dadurch gekennzeichnet, daß der Rückhaltehaken (32) aus einem Ausschnitt des Bodens (15) der Platine besteht.

5. Platine nach einem der vorhergehenden Ansprüche, bei der ihr flacher Boden (15) auf seiner Rückseite mit einer Hutschiene (16) versehen ist, die das elektrische Gerät durch Einklinken trägt, dadurch gekennzeichnet, daß die beiden Flügel (16a, 16b) der Hutschiene (16) je zwei koaxiale Bohrungen (43) für den Durchlaß eines Isolierrohrs (45) aufweisen, das als Wanne für elektrische Steuerleiter (47) dient.

## Claims

1. Removable support plate for at least one electric apparatus of a power distributor device (2) comprising a set of horizontal power bars (3) and an insulating elongate case (4) housing the set of bars, mounted fixedly in the central space of a profiled rail (14) and having, towards the front, a plurality of orifices (6) situated opposite the bars and serving for connecting a connector (20) carrying removable contact members (23) pluggable on the bars and connected by electric conductors to the respective terminals of the electric apparatus, said plate (1) comprising a flat vertical bottom (15) with the electric apparatus on its so-called rear face (15a),
characterized in that the bottom (15) of the plate is bordered over the whole of its height by two parallel lateral flanges (35) each having means (36) for engagement by clipping on the two flanges of the profiled rail (14) and, on its so-called front face (15b) opposite its rear face, the bottom (15) carries the connector (20) which has guide cheeks (26) for plugging its contact members (23) in or out by a translational movement remaining substantially perpendicular to the plane of the set of bars.

2. The plate as claimed in claim 1,
characterized in that the inner section of the plate formed by its bottom (15) and its two lateral flanges (35) is provided with a compression spring (38) in the form of a U shaped wire whose two ends bear on the edge of one of the two flanges of the profiled rail (14) for holding the plate in the clipped position.

3. The plate as claimed in claim 1 or 2,
characterized in that said connector (20) is removably mounted on the front face (15b) of the bottom of the plate by means of a removable piece (21) formed of a small plate (28) which has mounted laterally thereon two claws (30) under which bear respectively two axially aligned shafts (34), situated on each side of the connector, and which is formed with an opening (29) in which is engaged a retainer hook (32) projecting from the front face of the bottom of the plate.

4. The plate as claimed in claim 3,
characterized in that said retainer hook (32) is formed by a cut-out in the bottom (15) of the plate.

5. The plate as claimed in one of the preceding claims, with its flat bottom (15) provided on the rear face with a top-hat rail (16) to which the electric apparatus is clipped,
characterized in that the two flanges (16a, 16b) of said top-hat rail (16) have respectively two coaxial perforations (43) for the passage of an insulating tube (45) serving as channel for electric control conductors (47).
